## Europäisches Patentamt

## European Patent Office

## Office européen des brevets

(19)

(11) Numéro de publication: **0 049 193**
**B1**

(12) # FASCICULE DE BREVET EUROPEEN

(45) Date de publication du fascicule du brevet:
**16.01.85**

(51) Int. Cl.⁴: **B 60 P 1/44**

(21) Numéro de dépôt: **81401464.3**

(22) Date de dépôt: **21.09.81**

(54) **Dispositif de commande d'un hayon élévateur hydraulique repliable et escamotable monté sur un véhicule.**

(30) Priorité: **30.09.80 FR 8020922**
**27.03.81 FR 8106207**

(43) Date de publication de la demande:
**07.04.82 Bulletin 82/14**

(45) Mention de la délivrance du brevet:
**16.01.85 Bulletin 85/3**

(84) Etats contractants désignés:
**AT BE CH DE GB IT LI LU SE**

(56) Documents cités:
**BE - A - 828 457**
**DE - A - 2 654 285**
**FR - A - 2 260 467**
**FR - A - 2 372 049**
**FR - A - 2 376 012**
**GB - A - 1 314 001**
**US - A - 3 065 868**
**US - A - 3 369 679**
**US - A - 3 474 921**
**US - A - 3 498 481**
**US - A - 3 528 573**
**US - A - 4 078 676**

(73) Titulaire: **Société à Responsabilité Limitée dite:**
**MANUTIS, Zone Industrielle de Bellevue,**
**F-35220 Chateaubourg (FR)**

(72) Inventeur: **Tortellier, Christian, 57, rue d'Herblay,**
**F-95150 Taverny (FR)**

(74) Mandataire: **Moulines, Pierre et al, Cabinet BEAU de**
**LOMENIE 55, rue d'Amsterdam, F-75008 Paris (FR)**

ACTORUM AG

Description

La présente invention a pour objet un dispositif de commande d'un hayon élévateur hydraulique repliable et escamotable monté sur un véhicule.

On connaît des dispositifs élévateurs repliables montés sur des véhicules qui sont susceptibles d'être repliés et amenés d'une position horizontale située au niveau du plancher du véhicule à une position inclinée au sol.

Les dispositifs de commande connus permettant d'amener le hayon élévateur dans ces différentes positions nécessitent pour leur implantation des modifications importantes de la carrosserie du véhicule ainsi qu'un affaiblissement de celle-ci, ou un porte-à-faux très important pour loger le mécanisme. Certains dispositifs dépassent l'extrémité du véhicule une fois repliés.

Conformément à la présente invention telle que définie dans la revendication 1, on utilise un dispositif de commande d'un hayon élévateur hydraulique repliable et escamotable monté sur une véhicule, constitué d'un élément allongé porteur fixé au châssis du véhicule et muni respectivement à ses extrémités de deux flasques sur lesquels sont articulés par l'une de leurs extrémités deux bras de levage et deux vérins latéraux dont l'autre extrémité est articulée sur le plateau de hayon, lesdits bras de levage étant reliés par un élément allongé muni dans sa partie centrale d'une chape sur laquelle est articulée la tige de piston d'un vérin central dont le corps est articulé sur une chape solidaire de l'élément allongé porteur, lesdits vérins central et latéraux étant reliés respectivement à deux circuits d'alimentation de fluide hydraulique caractérisé en ce que les bras de levage sont télescopiques et les points de pivotement des vérins latéraux sont disposés de part et d'autre du plateau en dehors de celui-ci de manière à assurer le basculement du plateau sur les bras télescopiques entre les vérins latéraux.

On connaît du document FR-A-2 260 467 un dispositif tel que défini dans le préambule de la revendication 1 mais dans lequel le plateau est vertical en position escamotée. Les caractéristiques prévues dans la partie caractérisante permettent la rétraction du plateau de hayon replié sous le châssis du véhicule sans dépasser celui-ci et sans modifier la carrosserie.

Ce dispositif suivant l'invention est entièrement automatique dans son ouverture et sa fermeture grâce aux deux vérins latéraux à double effet qui ont également la fonction d'orientation du plateau lorsque celui-ci est déplié.

Le plateau de hayon est constitué de deux éléments dont l'un se replie au moyen de deux articulations situées de chaque côté de l'ensemble.

D'autres caractéristiques et avantages de l'invention seront mieux compris à la lecture de la description qui va suivre de plusieurs modes de réalisation et en se référant aux dessins annexés, sur lesquels:

- la fig. 1 est une vue en élévation du dispositif de commande du hayon élévateur en position repliée, escamotée sous le châssis du véhicule, dite position de route;
- la fig. 2 est une vue en élévation du dispositif de commande du hayon élévateur en position repliée sortie;
- la fig. 3 est une vue en plan de dessus du dispositif de commande du hayon;
- la fig. 4 est une vue en élévation du dispositif de commande du hayon en position sortie semi-ouverte;
- la fig. 5 est une vue en élévation du dispositif de commande du hayon en position d'appui sur le sol, le plateau étant horizontal avec déploiement manuel du second élément ou incliné et déployé;
- la fig. 6 est un schéma des circuits hydrauliques alimentant les vérins latéraux et central;
- la fig. 7 est une vue en élévation d'un second mode de réalisation du dispositif de commande du hayon élévateur en position repliée escamotée sous le châssis du véhicule, dite position de route;
- la fig. 8 est une vue en élévation du dispositif de commande du hayon selon la fig. 7, en position d'appui au sol;
- la fig. 9 est une vue en plan de dessus du dispositif de commande du hayon selon la fig. 7;
- la fig. 10 est une vue en plan d'un troisième mode de réalisation du dispositif de commande du hayon.

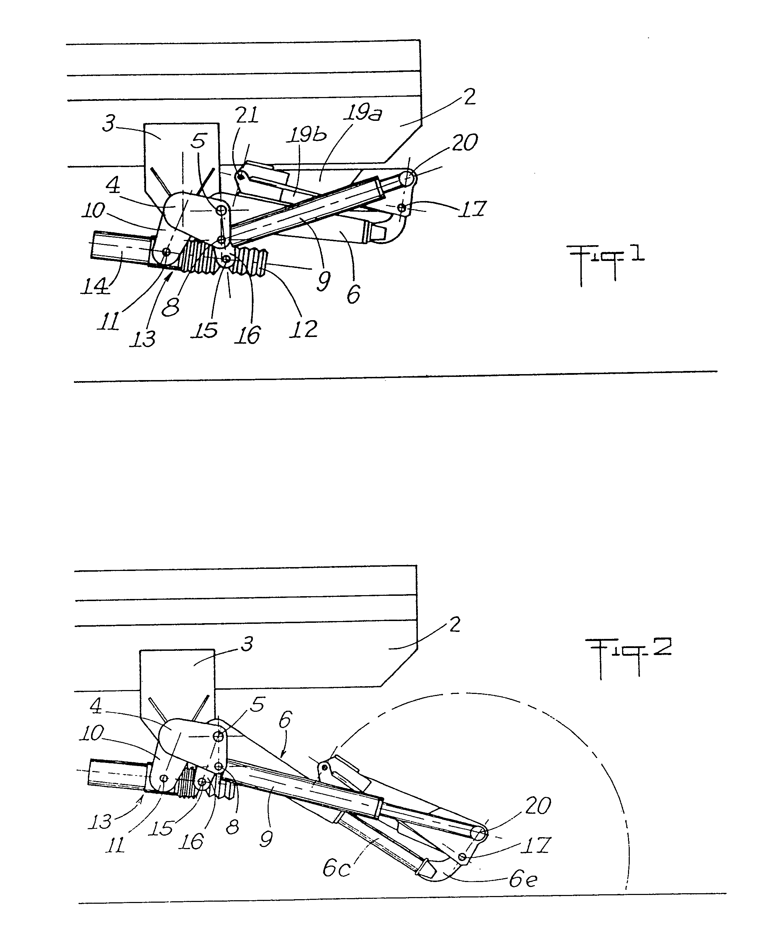

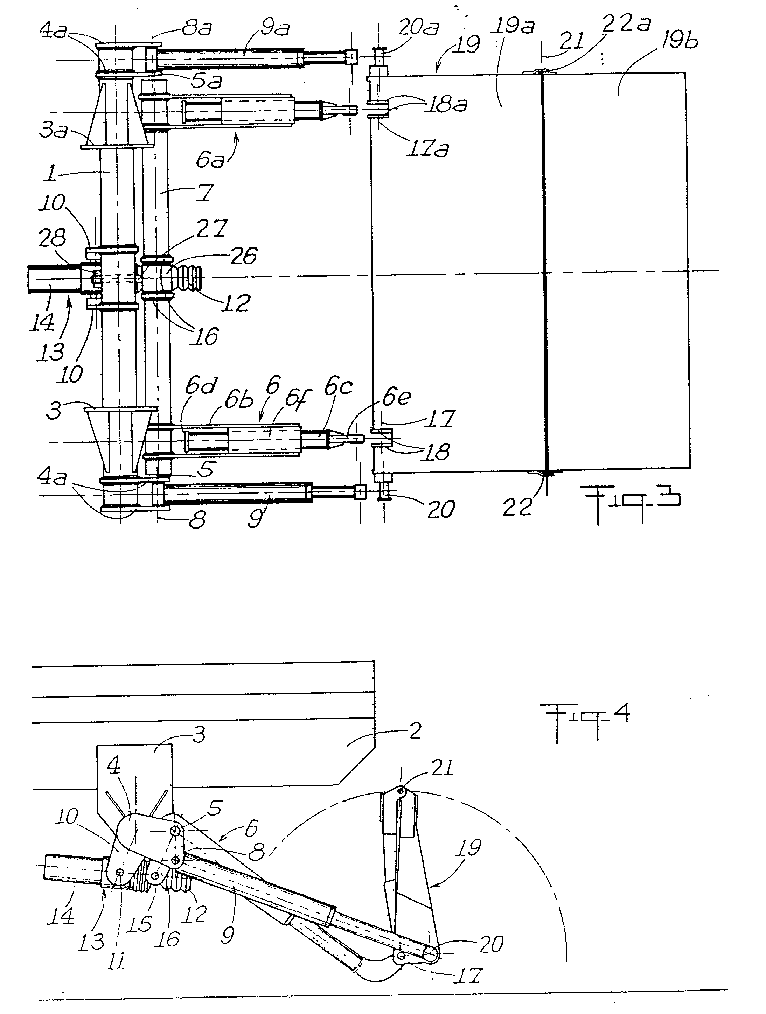

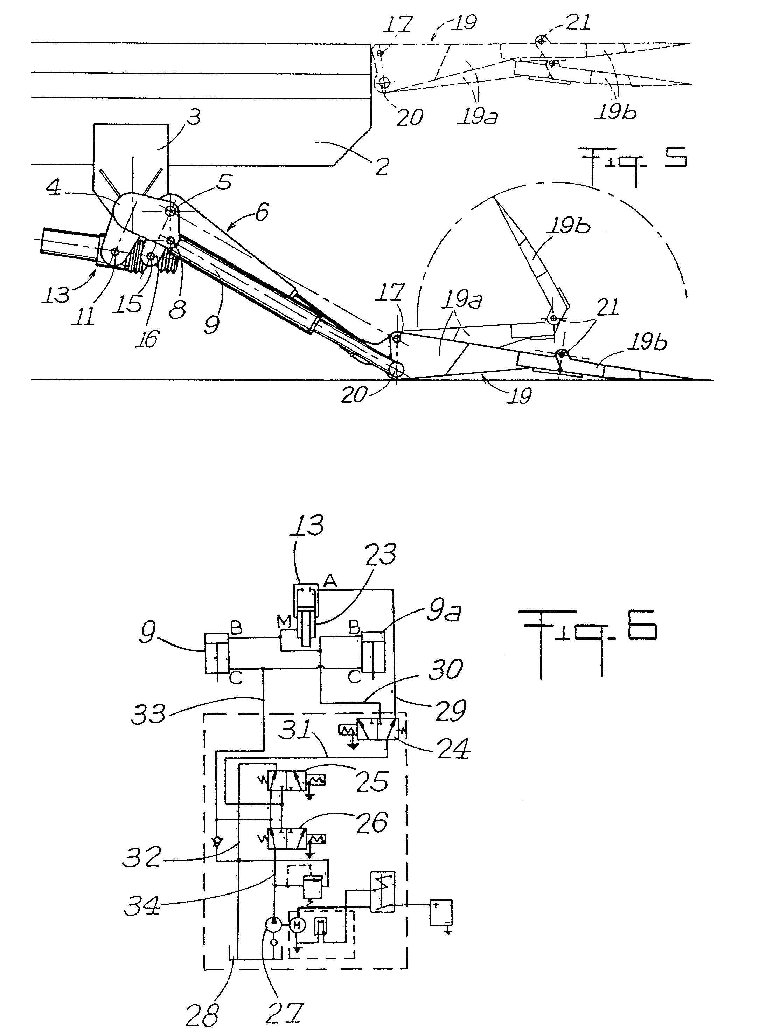

Aux fig. 1, 2, 3, 4 et 5, on a représenté un mode de réalisation du dispositif de commande d'un hayon élévateur suivant l'invention dont la partie mécanique est constitutée par trois ensembles principaux:

1) ensemble tube porteur
2) ensemble tube et double bras de levage télescopqiue
3) ensemble plateau repliable sur lui-même.

La partie hydraulique est constituée par deux types de vérins:

1) vérin central de levage
2) deux vérins latéraux à double effet pour l'orientation de hayon, la fermeture de celui-ci et la rétraction des bras télescopiques pour l'escamotage complet du dispositif.

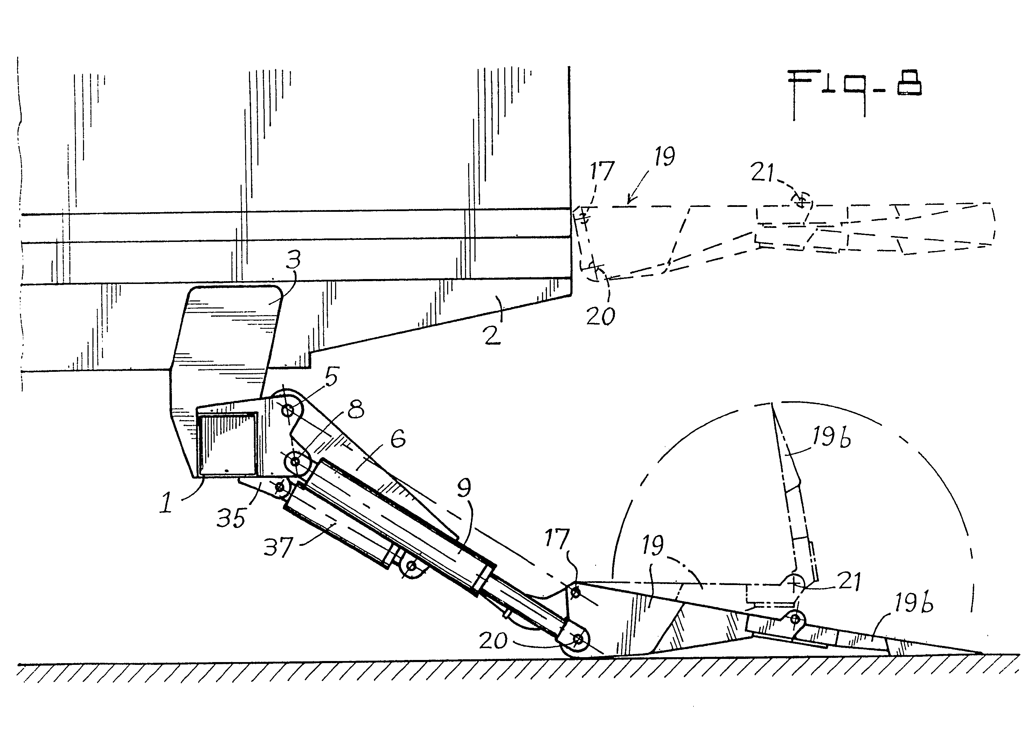

Le dispositif de commande d'un hayon élévateur suivant l'invention est constitué d'un tube porteur 1 qui est fixé au châssis 2 du véhicule par l'intermédiaire de deux platines 3, 3a (fig. 1 et 3). Aux extrémités du tube 1 sont respectivement fixées deux paires de flasques formant deux chapes 4, 4a sur lesquelles sont articulés respectivement autour d'axes 5, 5a des bras télescopiques de levage 6, 6a. Chaque bras 6, 6a est constitué d'une chape 6b fixée sur un tube de levage 7 et qui porte un coulisseau 6f dans lequel est monté coulissant un élément tubulaire 6c limité dans sa course par une bague 6d en position sortie et par une chape 6e en position rentrée. Le tube de levage 7 s'étend parallèlement au tube de sup-

port 1 et il est relié à celui-ci par une bague 26 montée autour du tube de levage dans sa partie centrale et par une tige filetée 27 solidaire de la bague et traversant le tube porteur 1 auquel elle est fixée par un écrou 28. Sur les chapes 4, 4a sont également articulés par l'une de leurs extrémités autour d'axes 8, 8a des vérins latéraux 9, 9a du type à double effet.

Dans la partie centrale du tube de support 1 est fixée une chape 10 sur laquelle est articulé autour d'un axe 11 le corps 14 d'un vérin central 13 dont la tige de piston 12 est articulée autour d'un axe 15 monté pivotant entre les branches d'une chape 16 fixée dans la partie centrale du tube de levage 7. A leur extrémité opposée aux axes 5, 5a les bras télescopiques de levage 6, 6a sont articulés par leur chape 6e autour d'axes 17, 17a montés dans des chapes 18, 18a prévues sur l'un des bords d'un plateau 19 de hayon.

A leur extrémité opposée aux axes 8, 8a les vérins latéraux 9, 9a sont articulés autour de tourillons 20, 20a, disposés de part et d'autre du plateau 19 en dehors de celui-ci et en porte à faux de manière à assurer le basculement du plateau sur les bras télescopiques entre les vérins latéraux. Cette disposition permet de constituer un parallélogramme déformable défini par les points d'articulation 5, 8, 17 et 20.

Le plateau 19 est constitué de deux parties 19a, 19b repliables l'une sur l'autre suivant un axe 21 parallèle aux axes d'articulation des bras de levage et des vérins latéraux sur la plate-forme. A cet effet le plateau 19 comporte deux charnières 22, 22a assurant le repliement des deux parties 19a, 19b.

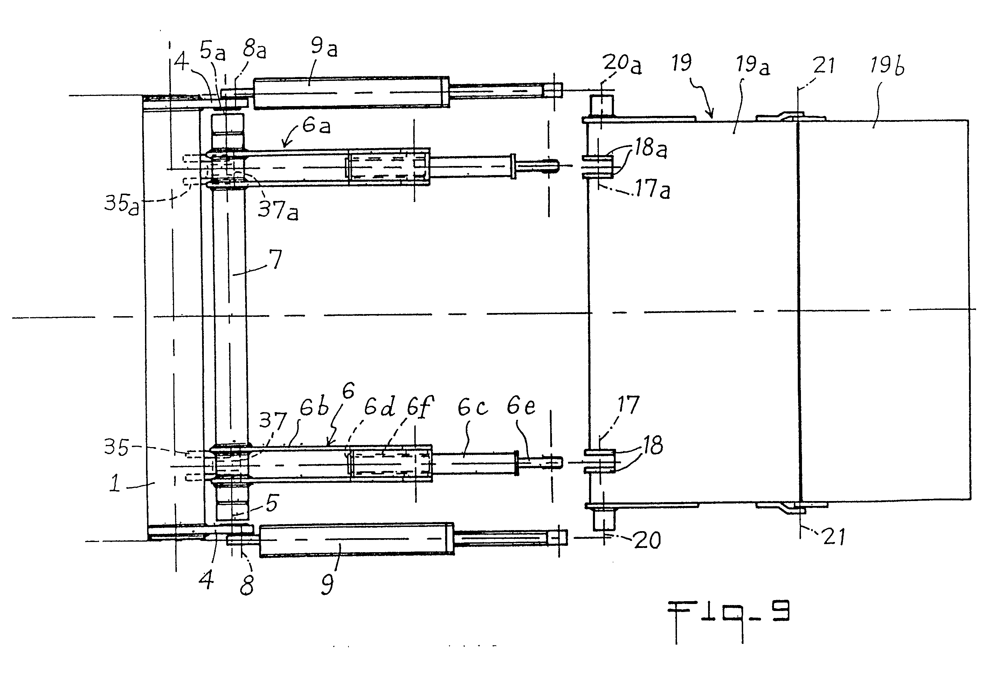

A la fig. 6, on a représenté des circuits hydrauliques alimentant les vérins latéraux et central.

Un circuit A alimente le vérin central 13 pour l'élévation et la descente par gravité du dispositif.

Un circuit B alimente les vérins latéraux à double effet 9, 9a du côté correspondant à la poussée pour l'orientation, l'ouverture, la fermeture du plateau 19 et la sortie du dispositif.

Un circuit C alimente les vérins latéraux 9, 9a, du côté correspondant à la rétraction pour l'orientation, la refermeture du plateau et l'escamotage du dispositif.

Un circuit M assure l'intercommunication entre une mémoire hydraulique 23 du vérin central 13 et le circuit B des vérins latéraux.

Les circuits A, B et C sont reliés sélectivement par des distributeurs 24, 25 et 26 à une pompe d'alimentation en fluide hydraulique 27 et à un bac de retour de fluide 28 sans pression. Le dispositif suivant l'invention fonctionne de la manière suivante.

L'ensemble du dispositif étant replié et escamoté sous le châssis comme représenté à la fig. 1, on agit sur le distributeur 25 afin de relier le conduit 31 au conduit 32 qui aboutit au réservoir de retour, de telle sorte que le conduit 29 du circuit A étant relié au conduit 31 par le distributeur 24, il en résulte que le vérin central 13 est relié au bac de retour et que sa vidange est assurée. Par gravitation le plateau 19 et l'ensemble du dispositif

tif s'inclinent vers le sol. Ensuite on agit sur le distributeur 24 afin de mettre en communication le conduit 30 du circuit B avec le conduit 31, sur le distributeur 25 pour le ramener dans sa position initiale représentée à la fig. 6 et sur le distributeur 26 pour mettre en communication le conduit 34 avec le conduit 31, reliant ainsi le circuit B et les vérins 9, 9a à la pompe 27 d'alimentation en fluide hydraulique.

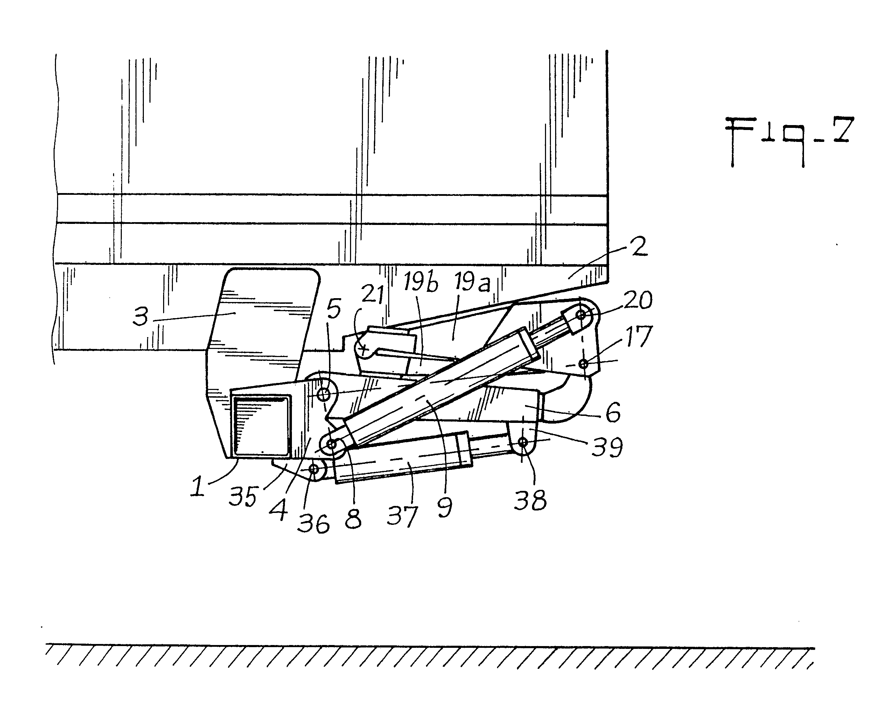

Les vérins latéraux 9, 9a actionnés dans la direction de la poussée viennent en extension provoquant l'allongement des bras télescopiques 6, 6a de telle sorte que le plateau 19 en position repliée se trouve en position sortie comme représenté à la fig. 2. En poursuivant l'alimentation des vérins latéraux 9, 9a par le circuit B dans la direction de la poussée, la partie 6c des bras télescopiques 6, 6a vient en butée contre le coulisseau 6f, de telle sorte que les bras latéraux 6, 6a étant en fin de course, le plateau 19 s'ouvre comme représenté à la fig. 4 et vient en position de basculement lorsque les trois axes 8, 17, 20 sont alignés. Lorsque le plateau a atteint cette position on agit sur les distributeurs 24 et 25 pour ramener ceux-ci dans la position représentée à la fig. 6, afin de relier le conduit 33 du circuit C au conduit 34 relié à la pompe d'alimentation 27 par le distributeur 26. Les vérins 9, 9a sont alors alimentés en fluide hydraulique dans le sens de la rétraction de telle sorte que le plateau 19 pivote autour de l'axe 17 et vient en position horizontale.

Lorsque le plateau 19 touche le sol (fig. 5) celui-ci s'incline par l'intermédiaire de la communication hydraulique (circuit M) existant entre les vérins latéraux 9, 9a (circuit B) et la chambre 23 intégrée au vérin central ainsi qu'il est décrit dans la demande de brevet n° 80.20824. On peut alors déplier manuellement la partie 19b du panneau 19 en la faisant pivoter autour de l'axe 21 pour l'amener dans la position représentée à la fig. 5.

Le plateau 19 étant ouvert à l'horizontale ou incliné on alimente le vérin central 13 en agissant sur les distributeurs 26 ou 25 pour relier le circuit A soit à la pompe soit au réservoir de retour afin de provoquer la montée ou la descente du plateau 19 et notamment sa mise à niveau avec le plancher du véhicule comme représenté en trait interrompu à la fig. 5.

Pour ramener le plateau dans sa position initiale de la fig. 1, il suffit d'amener le dispositif dans la position représentée à la fig. 2, en agissant sur les vérins latéraux 9, 9a et de commander le vérin central 13 pour provoquer le retrait du dispositif sous le châssis 2 du véhicule.

Toutefois, ce dispositif ne comporte qu'un seul vérin central de levage et il est préférable, pour une meilleure répartition des forces, d'utiliser deux vérins de levage.

Selon le second mode de réalisation, le dispositif de commande d'un hayon élévateur est constitué d'un tube porteur 1 qui est fixé au châssis 2 du véhicule par l'intermédiaire de deux platines 3, 3a (fig. 7, 8 et 9). Aux extrémités du tube 1 sont respectivement fixées deux paires de flasques 4, 4a sur lesquels sont articulés respectivement, autour d'axes 5, 5a, des bras télescopiques de levage 6, 6a. Chaque bras 6, 6a est constitué d'une chape 6b fixée sur un tube de levage 7 et qui porte un coulisseau 6f dans lequel est monté coulissant un élément tubulaire 6c limité dans sa course par une bague 6d en position sortie et par une chape 6e en position rentrée. Le tube de levage 7 s'étend parallèlement au tube de support 1.

Sur les chapes 4, 4a sont également articulés, par l'une de leurs extrémités autour d'axes 8, 8a, des vérins latéraux 9, 9a du type à double effet.

A leur extrémité opposée aux axes 8, 8a, les vérins latéraux 9, 9a sont articulés autour de tourillons 20, 20a disposés de part et d'autre du plateau 19 en dehors de celui-ci et en porte à faux de manière à assurer le basculement du plateau sur les bras télescopiques entre les vérins latéraux. Cette disposition permet de constituer un parallélogramme déformable défini par les points d'articulation 5, 8, 17 et 20.

Le plateau 19 est constitué de deux parties 19a, 19b repliables l'une sur l'autre suivant un axe 21 parallèle aux axes d'articulation des bras de levage et des vérins latéraux sur la plate-forme.

A leur extrémité opposée aux axes 5, 5a, les bras télescopiques de levage 6, 6a sont articulés par leur chape 6e autour d'axes 17, 17a montés dans des chapes 18, 18a prévues sur l'un des bords d'un plateau 19 du hayon.

Sur le tube porteur 1 (fig. 7, 8, 9) sont fixées des chapes 35, 35a sur lesquelles sont articulés autour d'un axe 36, par l'une de leurs extrémités, des vérins de levage 37, 37a dont l'autre extrémité est articulée autour d'un axe 38 sur des chapes telles que 39 fixées sur les bras 6, 6a.

Les vérins de levage 37, 37a fonctionnent de la même manière que le vérin central 13 et ils ont pour but de permettre l'abaissement et le levage de l'ensemble du hayon et de ses organes porteurs.

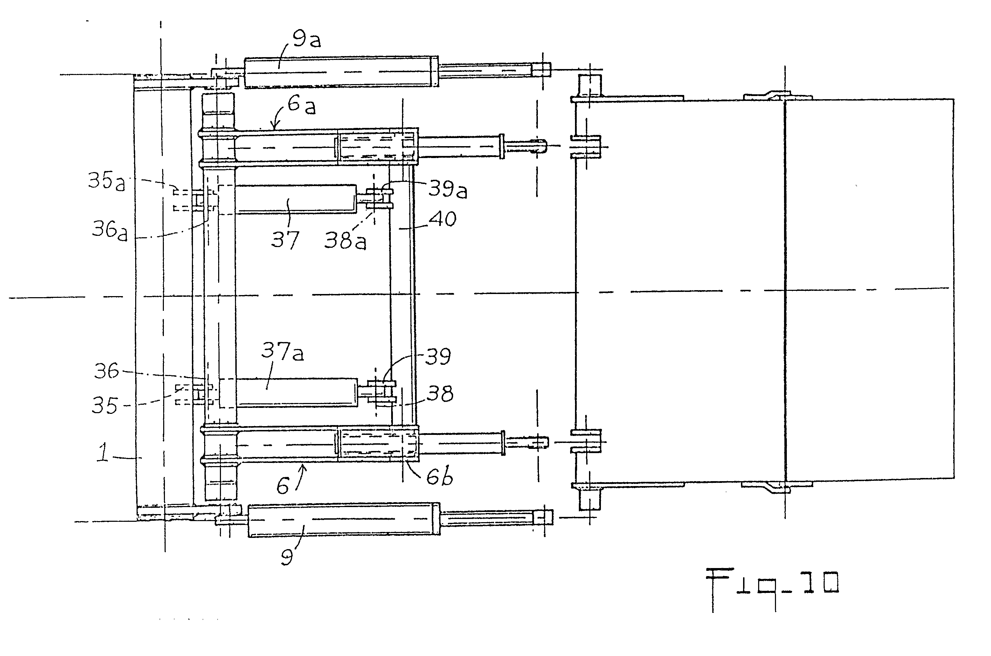

A la fig. 10, on a représenté une variante de réalisation dans laquelle un tube de torsion 40 est fixé à ses extrémités sur les bras 6, 6a entre ceux-ci. Sur le tube de torsion 40 sont fixées des chapes 39, 39a sur lesquelles sont articulés autour d'axes 38, 38a, par l'une de leurs extrémités, les vérins 37, 37a qui sont articulés par leur autre extrémité autour d'axes 36, 36a sur les chapes 35, 35a solidaires du tube porteur 1.

Bien entendu, la description n'est pas limitative et l'homme de l'art pourra y apporter des modifications sans sortir pour cela du domaine de l'invention.

## Revendications

1. Dispositif de commande d'un hayon élévateur hydraulique repliable et escamotable monté sur un véhicule, constitué d'un élément allongé porteur (1) fixé au châssis (2) du véhicule et muni respectivement à ses extrémités de deux flasques (4, 4a) sur lesquels sont articulés par l'une de leurs extrémités deux bras de levage (6, 6a) et deux vérins latéraux (9, 9a) dont l'autre extrémité est articulée sur le plateau (19) de hayon, lesdits bras de levage (6, 6a) étant reliés par un élément allongé (7) muni dans sa partie centrale d'une chape (16) sur laquelle est articulée la tige de piston d'un vérin central (13) dont le corps est articulé sur une chape solidaire de l'élément allongé porteur, lesdits vérins central et latéraux étant reliés respectivement à trois circuits d'alimentation de fluide hydraulique caractérisé en ce que les bras de levage (6, 6a) sont télescopiques et les points de pivotements (20, 20a) des vérins latéraux (9, 9a) sont disposés de part et d'autre du plateau (19) en dehors de celui-ci de manière à assurer le basculement du plateau sur les bras télescopiques (6, 6a) entre les vérins latéraux (9, 9a).

2. Dispositif suivant la revendication 1, caractérisé en ce que les vérins hydrauliques latéraux (9, 9a) sont du type à double effet.

3. Dispositif suivant la revendication 1, caractérisé en ce que le plateau (19) est constitué de deux parties repliables (19a, 19b) l'une sur l'autre suivant un axe (21) parallèle aux axes d'articulation des bras de levage (6, 6a) et des vérins latéraux (9, 9a) sur le plateau.

4. Dispositif suivant la revendication 1, caractérisé en ce qu'une mémoire hydraulique constituée d'une chambre à volume variable (23) intégrée au vérin central (13) est reliée aux vérins latéraux (9, 9a) et commandée par le vérin central (13) pour contrôler l'inclinaison au sol du plateau (19) de hayon et son retour à sa position initialement réglée.

5. Dispositif suivant la revendication 1, caractérisé en ce que les bras de levage (6, 6a) sont constitués d'une chape (6b) fixée sur l'élément allongé de levage (7) et qui porte un coulisseau (6f) dans lequel est monté coulissant un élément tubulaire (6c) limité dans sa course par une bague (6d) en position sortie et une chape 6e en position rentrée.

6. Dispositif modifié en ce que le vérin central (13) est remplacé par deux vérins de levage (37, 37a) dont une extrémité est articulée sur l'élément allongé porteur (1) et dont l'autre extrémité est montée de façon articulée sur les bras de levage 6, 6a.

7. Dispositif suivant la revendication 6, caractérisé en ce que, entre les bras de levage (6, 6a), est fixée une barre de torsion (40), sur laquelle sont articulés par l'une de leurs extrémités les deux vérins de levage (37, 37a).

## Claims

1. A device for control of a hydraulic, foldable and retractable cargo elevator mounted on a vehicle, consisting of an extended carrying element 1 fixed to the chassis 2 of the vehicle and fitted respectively at its ends with two flanges 4, 4a, to which are hinged by one of their ends two lifting arms 6, 6a, and two lateral cylinders 9, 9a, of which the other end is hinged to the elevator bed 19, said lifting arms 6, 6a being connected by extended element 7 fitted in its center with a yoke 16 to which is hinged the piston rod of a central cylinder 13 of which the body is hinged on a yoke solid with the extended carrying element, said central and side cylinders being connected respectively to three hydraulic feed circuits characterized in that the lifting arms 6, 6a are telescopic and the pivoting points 20, 20a of the lateral cylinders 9, 9a are placed on either side of the bed 19, and outside it, in order to tilt the bed on the telescopic arms 6, 6a, between the lateral cylinders 9, 9a.

2. A device according to claim 1, characterized in that the lateral hydraulic cylinders 9, 9a are of double-action type.

3. A device according to claim 1, characterized in that the bed 19 consists of two sections 19a, 19b, foldable on each other along an axis 21 parallel to the pivoting axes of the lifting arm 6, 6a and of the lateral cylinders 9, 9a on the bed.

4. A device according to claim 1, characterized in that a hydraulic memory consisting of a variable volume chamber 23 forming part of the central cylinder 13 is connected to the lateral cylinders 9, 9a and driven by the central cylinder 13 to control the gradient on the ground of the elevator bed 19 and its return to its initially set position.

5. A device according to claim 1, characterized in that the lifting arms 6, 6a, consist of a yoke 6b fixed to the extended lifting element 7 and bear a slide 6f in which is fitted a tubular element 6c so that it slides, limited in its travel by a ring 16 in the extended position and a yoke 6e in the withdrawn position.

6. A device according to claim 1, modified in that the central cylinder 13 is replaced by two lifting cylinders 37, 37a of which one end is hinged to the extending lifting element 1 and the other end is hinged to the lifting arms 6, 6a.

7. A device according to claim 6, characterized in that a torsion bar 40 is secured between the lifting arms 6, 6a with the two lifting cylinders 37, 37a hinged by one of their ends to said torsion bar.

## Patentansprüche

1. Vorrichtung zur Steuerung einer an einem Fahrzeug befestigten ein- und ausklappbaren Ladebordwand,
– die aus einem langgestreckten Tragelement (1) besteht, das am Fahrgestell (2) eines Fahrzeugs befestigt und jeweils an seinen Enden mit zwei Flanschen (4, 4a) versehen ist, an denen an einem ihrer Enden zwei Hubarme (6, 6a) und zwei seitliche Stellzylinder (9, 9a) angelenkt sind, deren anderes Ende an der Platte (19) der Ladeplattform angelenkt ist,
– wobei die Hubarme (6, 6a) mit einem langgestreckten Element (7) verbunden sind, das in seinem Mittelteil mit einem Gabelbügel (16) versehen ist, an dem die Kolbenstange eines mittleren Stellzylinders (13) angelenkt ist, dessen Körper an einem mit dem langgestreckten Tragelement verbundenen Gabelbügel angelenkt ist,
– wobei die mittleren und seitlichen Stellzylinder jeweils mit drei Kreisen zur Speisung mit hydraulischem Druckmittel versehen sind, dadurch gekennzeichnet,
– dass die Hubarme (6, 6a) teleskopartig ausfahrbar und die Drehpunkte (20, 20a) der seitlichen Stellzylinder (9, 9a) beiderseits der Platte (19) ausserhalb dieser derart angelenkt sind, dass das Schwenken der Platte auf die teleskopartig ausfahrbaren Arme (6, 6a) zwischen den seitlichen Stellzylindern (9, 9a) gewährleistet ist.

2. Vorrichtung nach Anspruch 1, dadurch gekennzeichnet,
– dass die seitlichen hydraulischen Stellzylinder (9, 9a) von doppeltwirkender Bauart sind.

3. Vorrichtung nach Anspruch 1, dadurch gekennzeichnet,
– dass die Platte (19) aus zwei Teilen (19a, 19b) besteht, die um eine Achse aufeinander faltbar sind, die zu den Anlenkachsen der Hubarme (6, 6a) und der seitlichen Stellzylinder (9, 9a) an der Platte parallel ist.

4. Vorrichtung nach Anspruch 1, dadurch gekennzeichnet,
– dass ein hydraulischer Speicher, der aus einer im mittleren Stellzylinder (13) eingebauten Kammer mit veränderlichem Volumen besteht, mit den seitlichen Stellzylindern (9, 9a) verbunden ist und durch den mittleren Stellzylinder (13) gesteuert wird, um die Neigung der Platte (19) der Ladeplattform gegenüber dem Boden und ihre Rückkehr in ihre ursprünglich eingestellte Stellung zu steuern.

5. Vorrichtung nach Anspruch 1, dadurch gekennzeichnet,
– dass die Hubarme (6, 6a) aus einem Gabelbügel (6b) bestehen, der am langgestreckten Hubelement (7) befestigt ist und eine Gleitführung (6f) trägt, in der ein rohrförmiges Element (6c) verschiebbar gelagert ist, dessen Hub in der Ausfahrstellung durch einen Ring (6d) und in der Rückzugstellung durch einen Gabelbügel (6e) begrenzt ist.

6. Vorrichtung nach Anspruch 1, abgeändert dadurch,
– dass der mittlere Stellzylinder (13) durch zwei Hubzylinder (37, 37a) ersetzt ist, deren eines Ende am langgestreckten Tragelement (1) und deren anderes Ende am Hubarm (6, 6a) angelenkt ist.

7. Vorrichtung nach Anspruch 6, dadurch gekennzeichnet,
– dass zwischen den Hubarmen (6, 6a) ein Torsionsstab (4) befestigt ist, an dem die beiden Hubzylinder (37, 37a) mit einem ihrer Enden angelenkt sind.

Fig. 1

Fig. 2

Fig. 3

Fig. 4

Fig. 5

Fig. 6

Fig.2

0 049 193

Fig-8

0 049 193

5a 8a 9a 20a 19 19a 21 19b

4

6a

18a

17a

35a 37a

7

35 37 6b 6 6d 6f 6c 6e 17 18

1

5

4 8 9

20 21

Fig. 9

Fig. 10

0 049 193